# EUROPÄISCHE PATENTSCHRIFT

(11) **EP 3 172 869 B1**
(45) Veröffentlichungstag und Bekanntmachung des Hinweises auf die Patenterteilung: **09.01.2019**
(21) Anmeldenummer: 15750257.6
(22) Anmeldetag: 14.07.2015
(51) Int. Cl.: H04L 12/26, H04L 12/24, H04L 12/40, H04L 12/733, H04L 12/751, H04L 12/721, H04L 12/707, H04L 12/931, H04L 12/46, H04L 29/06

(54) **VERFAHREN ZUR NACHBILDUNG VON LAUFZEITEN IN NETZWERKEN, SOWIE ENTSPRECHENDES GATEWAY**
METHOD FOR REPRODUCING DELAYS IN NETWORKS AND CORRESPONDING GATEWAY
PROCÉDÉ POUR REPRODUIRE DES DÉLAIS DANS DES RÉSEAUX ET PASSERELLE CORRESPONDANTE

(30) Priorität: 21.07.2014 EP 14177808
(43) Veröffentlichungstag der Anmeldung: 31.05.2017
(73) Patentinhaber: dSPACE digital signal processing and control engineering GmbH, 33102 Paderborn (DE)
(72) Erfinder: MÜLLER, Björn, 33106 Paderborn (DE)
(86) Internationale Anmeldenummer: PCT/EP2015/066045
(87) Internationale Veröffentlichungsnummer: WO 2016/012304

(56) Entgegenhaltungen:
- US-A1- 2003 053 466
- US-A1- 2010 002 591

## Beschreibung

Die Kommunikation zwischen Sendern und Empfängern in einem Netzwerk soll getestet werden. Dies ist schwierig, wenn das Netzwerk nicht so aufgebaut werden kann, wie es später genutzt werden soll. Mit anderen Worten, das Soll-Netzwerk ist für den Test nicht geeignet. Dies kann bspw. der Fall sein, wenn nicht alle Elemente des Soll-Netzwerkes zu Verfügung stehen oder die Nachrichten, die zwischen den Sendern und Empfängern ausgetauscht werden, überwacht werden sollen. Eine solche Überwachung erfordert im Allgemeinen eine Veränderung des Netzwerkes, was wiederum die Eigenschaften des Netzwerkes, bspw. die Laufzeiten der Nachrichten verändert. Eine andere Möglichkeit der Überwachung ist es bspw. alle Sender und Empfänger an ein zentraler Gateway anzuschließen. Das Gateway übermittelt dann die Nachrichten zwischen Sender und Empfänger und kann alle Nachrichten überwachen. Dieser Aufbau in einer Sterntopologie ist im Allgemeinen nicht der Aufbau des Soll-Netzwerkes und ändert bspw. die Laufzeiten der Nachrichten.

Aus der US 2003/053466 ist ein Verfahren zur Angleichung von Laufzeiten zweier Datenströme bekannt.

Aufgabe der Erfindung ist es den Stand der Technik weiterzubilden.

Verfahren , bei dem Laufzeiten eines Soll-Netzwerkes in einem Ist-Netzwerk nachgebildet werden, wobei die Topologie des Sollnetzwerkes eine Anzahl von Sendern und eine Anzahl von Empfängern umfasst, und wobei die Topologie des Ist-Netzwerkes einen oder mehrere der Sender und Empfänger umfasst, wobei sich der Weg zwischen einem ersten Sender und einem ersten Empfänger in der Topologie des Ist-Netzwerks vom Weg zwischen dem ersten Sender und dem ersten Empfänger in der Topologie des Soll-Netzwerks unterscheidet, wobei in dem Ist-Netzwerk mindestens eine erste Nachricht des ersten Senders von einem Gateway mit mindestens zwei Netzwerkschnittstellen über eine erste Netzwerkschnittstelle empfangen wird, um eine Verzögerung verzögert wird und über eine zweite Netzwerkschnittstelle auf einen Weg zu dem ersten Empfänger gesendet wird, wobei der Weg der ersten Nachricht nach Maßgabe der Topologie des Ist-Netzwerkes bestimmt wird und die Verzögerung der Nachricht nach Maßgabe der Topologie des Soll-Netzwerkes derart bestimmt wird, dass die Laufzeit der ersten Nachricht im Ist-Netzwerk im Wesentlichen gleich der Laufzeit der ersten Nachricht im Soll-Netzwerk ist, wobei die Verarbeitungszeiten der Netzwerkelemente im Soll-Netzwerk dem Gateway bekannt sind.

Erfindungsgemäß wird ein Gateway gemäß Anspruch 13 definiert, welches die Laufzeiten von Nachrichten eines Soll-Netzwerks, d.h. die Laufzeiten von Nachrichten wie sie in einem Soll-Netzwerk zu erwarten sind, in einem Ist-Netzwerk nachbildet. Das Soll-Netzwerk umfasst dabei zumindest eine Anzahl von Sendern und eine Anzahl von Empfängern, die miteinander vernetzt sind. Zusätzlich können andere Netzwerkelemente wie Weiterleitungselemente bspw. Router oder Switche enthalten sein. Die Struktur der Verbindungen der Sender, Empfänger und weiteren Netzwerkelemente ist beliebig. Das Soll-Netzwerk kann bspw. ein vermaschtes Netz oder eine Baum-Topologie darstellen. Sender und Empfänger von Nachrichten werden im Folgenden auch allgemein als Netzwerkteilnehmer bezeichnet. Um die Laufzeiten des Soll-Netzwerkes nachzubilden, werden ein oder mehr Sender und ein oder mehr Empfänger, die den Sendern und Empfängern des Soll-Netzwerkes gleichen in einem Ist-Netzwerk verbunden. Dabei ist die Laufzeit für die erste Nachricht vom ersten Sender zum ersten Empfänger im Ist-Netzwerk ohne Verzögerung durch das Gateway kürzer als im Soll-Netzwerk. Die Laufzeit im Soll-Netzwerk bestimmt sich aus der Topologie des Soll-Netzwerkes, das heißt aus den Netzwerkelementen und den Leitungen, die die Netzwerkelemente verbinden. Sowohl Leitungen als auch Netzwerkelemente tragen zur Laufzeit der Nachrichten im Soll-Netzwerk bei. Die erste Verzögerung der ersten Nachricht im Ist-Netzwerk kann dann so gewählt werden, dass die Laufzeit der ersten Nachricht im Ist-Netzwerk im Wesentlichen gleich der Laufzeit der ersten Nachricht im Soll-Netzwerk ist. Die Dauer von der Aussendung der ersten Nachricht durch den ersten Sender bis zum Empfang der ersten Nachricht durch den ersten Empfänger ist also unabhängig davon ob der erste Sender und der erste Empfänger im Ist-Netzwerk oder im Soll-Netzwerk verbaut sind. Die Kommunikation zwischen dem ersten Sender und dem ersten Empfänger kann daher getestet werden, obwohl sich die Topologie des Netzwerkes zwischen dem ersten Sender und dem ersten Empfänger unterscheidet. Durch die Simulation unterschiedlicher Topologien von Soll-Netzwerken können die Vor- und Nachteile der Topologien und unterschiedlicher Konfigurationen von Netzwerkteilnehmern und Segmentkopplungselementen schneller evaluiert werden. Beispielsweise können Engpässe in der Kommunikation bzw. hoch belastete Netzwerkleitungen aufgespürt werden. Durch das Gateway wird nachgebildet welche Laufzeiten verschiedene Nachrichten durch Soll-Netzwerk haben. Durch die Nachbildung der Laufzeiten verschiedener Soll-Netzwerke können diese Netzwerke effektiv verglichen oder nachgebildet oder simuliert werden.

Es sei angemerkt, dass unter einer wesentlichen Gleichheit der Laufzeiten im Ist-Netzwerk und im Soll-Netzwerk verstanden wird, dass sich die Laufzeiten um weniger als 10% unterscheiden. Vorzugsweise unterscheiden sich die Laufzeiten um weniger als 1%.

Es ist vorteilhaft, wenn dem Gateway die Topologie des Soll-Netzwerkes bekannt ist. Dann kann das Gateway basierend auf der Topologie des Soll-Netzwerks für die erste Nachricht den Weg durch das Soll-Netzwerk bestimmen, eine Laufzeit für diesen Weg bestimmen und die erste Nachricht derart verzögern, dass die Laufzeit der ersten Nachricht im Ist-Netzwerk im Wesentlichen gleich der Laufzeit der ersten Nachricht im Soll-Netzwerk ist.

In einer vorteilhaften Ausführungsform der Erfindung unterscheidet sich der Weg zwischen dem ersten Sender und einem zweiten Empfänger in der Topologie des Soll-Netzwerks von dem Weg zwischen dem ersten Sender und dem ersten Empfänger in der Topologie des Soll-Netzwerks, wobei in dem Ist-Netzwerk mindestens eine zweite Nachricht des ersten Senders von dem Gateway empfangen wird, um eine zweite Verzögerung verzögert wird und auf einen Weg zu dem zweiten Empfänger gesendet wird, wobei der Weg der zweiten Nachricht nach Maßgabe der Topologie des Ist-Netzwerkes bestimmt wird und die Verzögerung der zweiten Nachricht nach Maßgabe der Topologie des Soll-Netzwerkes derart bestimmt wird, dass die Laufzeit der zweiten Nachricht im Ist-Netzwerk im Wesentlichen gleich der Laufzeit der zweiten Nachricht im Soll-Netzwerk ist.

Das Gateway ist erfindungsgemäß in der Lage unterschiedliche Nachrichten unterschiedlich zu verzögern. So kann für die Nachrichten im Ist-Netzwerk eine Verzögerung entsprechend der Weglänge im Soll-Netzwerk bestimmt werden. Im Sonderfall, dass sich aus der Topologie des Soll-Netzwerks eine Verzögerung kleiner als Null ergibt, wird die Nachricht nicht verzögert.

In einer vorteilhaften Ausgestaltung der Erfindung sind die Verarbeitungszeiten der Netzwerkelemente im Soll-Netzwerk dem Gateway bekannt.

Bei bekannten Verarbeitungszeiten der Netzwerkelemente im Soll-Netzwerk lässt sich die Laufzeit der ersten Nachricht durch das Soll-Netzwerk durch Aufsummieren der Verarbeitungszeiten der Netzwerkelemente auf dem Weg der ersten Nachricht durch das Soll-Netzwerk bestimmen. Als Netzwerkelemente werden hier bspw. Switche, Hubs und Router angesehen. Die Verarbeitungszeit ist die Zeit zwischen Empfang und Versendung einer Nachricht. Die Verarbeitungszeit eines Netzwerkelementes ist häufig vom Hersteller bekannt oder lässt sich auf dem Fachmann bekanntem Wege bestimmen, bspw. durch Messen an einem baugleichen oder ähnlichen Gerät.

In einer vorteilhaften Ausgestaltung der Erfindung sind die Laufzeiten zwischen den Netzwerkelementen im Soll-Netzwerk dem Gateway bekannt.

Bei bekannten Laufzeiten zwischen den Netzwerkelementen im Soll-Netzwerk lässt sich die Laufzeit der ersten Nachricht durch das Soll-Netzwerk durch Aufsummieren der Laufzeiten zwischen den Netzwerkelementen im Soll-Netzwerk auf dem Weg der ersten Nachricht durch das Soll-Netzwerk bestimmen. Durch die Kombination von bekannten Verarbeitungszeiten der Netzwerkelemente und bekannten Laufzeiten zwischen den Netzwerkelementen im Soll-Netzwerk lässt sich die Bestimmung der Laufzeiten im Soll-Netzwerk weiter steigern.

In einer vorteilhaften Ausgestaltung ist das Soll-Netzwerk zumindest teilweise ein Ethernet-, CAN- und/oder FlexRay-Netzwerk.

In einer weiteren vorteilhaften Ausgestaltung wird von dem Gateway eine Kopie der ersten Nachricht an einen dritten Empfänger versendet.

Durch das Erstellen von Kopien und das Sammeln der Kopien lässt sich der Nachrichtenaustausch zu einem späteren Zeitpunkt nachvollziehen. Die Nachvollziehbarkeit wird genauer, wenn von vielen Nachrichten Kopien gesammelt werden.

In einer weiteren vorteilhaften Ausgestaltung wird die erste Nachricht von dem Gateway auf zumindest ein Merkmal geprüft und in Abhängigkeit von der Prüfung eine Kopie der ersten Nachricht an einen dritten Empfänger versendet.

Durch die Prüfung der ersten Nachricht kann das Gateway feststellen, ob die Versendung einer Kopie notwendig ist. Auf diese Weise werden nur Nachrichten kopiert, deren Merkmal auf den für die Prüfung festgelegten Filter passt. Das zu prüfende Merkmal kann beispielsweise die IP-Adresse des Absender oder Empfängers, die Größe der Nachricht, der Zeitpunkt der Nachricht, eine Nachrichten-ID oder ein Schlüsselwort in der Nachricht sein. Durch die Reduzierung der zu kopierenden Nachrichten wird die Effektivität des Verfahrens erhöht.

In einer vorteilhaften Ausgestaltung der Erfindung wird die erste Nachricht von dem Gateway nach dem Empfang und vor der Versendung an den zweiten Empfänger vom Gateway verändert.

In einer vorteilhaften Ausgestaltung der Erfindung betrifft die Veränderung der ersten Nachricht eine Umwandlung der ersten Nachricht von einem ersten Protokoll in zweites Protokoll.

Eine Umwandlung des Protokolls in dem die erste Nachricht verschickt wird ist beispielsweise vorteilhaft, wenn der erste Sender und der erste Empfänger über unterschiedliche Protokolle kommunizieren. Beispielsweise kann der Sender die erste Nachricht über Ethernet als UDP/IP-Nachricht verschicken und der Empfänger eine FlexRay-Nachricht erwarten. Dann kann das Gateway die erste Nachricht entsprechend verändern. Ein Busprotokoll kann beispielsweise ein Protokoll nach einem CAN-Standard, einem LIN-Standard oder einem FlexRay-Standard sein. Ein Netzwerkprotokoll kann beispielsweise ein Protokoll nach einem Ethernet-Format oder nach einem MOST-Format sein.

In einer anderen vorteilhaften Ausgestaltung der Erfindung betrifft die Veränderung der ersten Nachricht eine Veränderung des Inhalts der Nachricht.

Durch eine solche Veränderung der ersten Nachricht kann beispielsweise eine Fehlfunktion eines Netzwerkelementes im Soll-Netzwerk simuliert werden. So ist es beispielsweise möglich einzelne Bits der Nachricht zu verändern oder wegzulassen oder zusätzliche Bits hinzuzufügen.

In einer vorteilhaften Ausgestaltung der Erfindung bestimmt das Gateway die Auslastung von Netzwerkelemente und/oder Netzwerkleitungen im Soll-Netzwerk und erhöht die Verzögerung der ersten Nachricht bei hoher Auslastung von Netzwerkelementen und/oder Netzwerkleitungen zusätzlich.

Das Gateway bestimmt also neben der Laufzeit, die sich aus dem Weg durch das Soll-Netzwerk ergibt, eine Verzögerungszeit, die sich aus der Auslastung der Netzwerkelemente und/oder Netzwerkleitungen im Soll-Netzwerk. Eine solche Verzögerungszeit durch die Auslastung kann sich bspw. dadurch ergeben, dass ein Netzwerkelement nur eine Aufgabe auf einmal ausführen kann und dadurch andere Aufgaben, wie bspw. die Bearbeitung der ersten Nachricht, bis zur Beendigung der ersten Aufgabe warten müssen. Andere Verzögerungszeiten können sich ergeben, wenn auf einer Netzwerkleitung im Soll-Netzwerk, die auf dem Weg der ersten Leitung liegt, eine dritte Nachricht übermittelt wird und die Übermittlung der ersten Nachricht bis zur Beendigung der Übermittlung der dritten Nachricht warten muss. Damit die Laufzeit der ersten Nachricht im Ist-Netzwerk im Wesentlichen gleich der Laufzeit der ersten Nachricht im Soll-Netzwerk ist, muss folglich die Verzögerung der ersten Nachricht durch das Gateway erhöht werden, um die durch die Auslastung der Netzwerkelemente und/oder Netzwerkleitungen erhöhte Laufzeit im Soll-netzwerk auszugleichen.

In einer weiteren vorteilhaften Ausgestaltung wird eine dritte Nachricht über eine dritte Netzwerkschnittstelle vom Gateway empfangen, der Weg der dritten Nachricht im Soll-Netzwerk vom Gateway bestimmt und die Verzögerung der ersten Nachricht vergrößert, wenn die dritte Nachricht im Soll-Netzwerk zu einer zusätzlichen Verzögerung der ersten Nachricht führt.

Das Gateway bestimmt folglich für zwei unterschiedliche Nachrichten, ob sich die Wege der Nachrichten im Soll-Netzwerk überschneiden und ob die durch die dritte Nachricht verursachte Auslastung der Netzwerkelemente und/oder Netzwerkleitungen im Soll-Netzwerk zu einer zusätzlichen Verzögerung der ersten Nachricht führt. Eine solche Bestimmung ist auch in der anderen Richtung möglich, d.h. es wird bestimmt, ob die durch die erste Nachricht verursachte Auslastung der Netzwerkelemente und/oder Netzwerkleitungen im Soll-Netzwerk zu einer zusätzlichen Verzögerung der dritten Nachricht führt. Insbesondere bei großen Netzwerken ist es vorteilhaft die zeitliche Auslastung der Netzwerkelemente und/oder Netzwerkleitungen im Soll-Netzwerk genau zu bestimmen, d.h. zu bestimmen welchen Zeitpunkten die dritte Nachricht zu einer Auslastung welcher Netzwerkelemente und/oder Netzwerkleitungen im Soll-Netzwerk führt. Entsprechend kann der Weg der ersten Nachricht durch das Soll-Netzwerk zeitlich gegliedert werden und Überschneidungen der Wege erkannt werden.

Welche Nachricht verzögert wird, kann dabei bspw. von der Priorität der Nachrichten abhängen. So wird ein Netzwerkelement im Soll-Netzwerk, dass zwei Nachrichten im Wesentlichen zeitgleich empfängt zunächst die Nachricht mit der höheren Priorität verarbeiten und die Nachricht mit der niedrigeren Priorität erst danach. Das Gateway im Ist-Netzwerk wird ein solches Verhalten nachbilden und die Nachricht mit der niedrigeren Priorität entsprechend höher verzögern als die Nachricht mit der höheren Priorität.

In einer anderen vorteilhaften Ausgestaltung der Erfindung wird vom Gateway eine vierte Nachricht innerhalb des Soll-Netzwerks simuliert und die Verzögerung der ersten Nachricht vergrößert, wenn die vierte Nachricht im Soll-Netzwerk zu einer zusätzlichen Verzögerung der ersten Nachricht führt.

Durch die Simulierung weitere Nachrichten durch das Gateway kann der Netzwerkverkehr innerhalb des Soll-Netzwerks nachgestellt werden. Die simulierten Nachrichten können insbesondere durch die von ihnen verursachte Auslastung der Netzwerkelemente und/oder Netzwerkleitungen im Soll-Netzwerk simuliert werden. Die Auslastung der Netzwerkelemente und/oder Netzwerkleitungen im Soll-Netzwerk kann dann zu zusätzlichen Verzögerungen der ersten Nachricht führen.
Das Gateway kann also sowohl Empfänger als auch Sender simulieren. Netzwerkteilnehmer können daher Nachrichten auch erfolgreich versenden, wenn die im Soll-Netzwerk vorgesehenen Empfänger im ist-Netzwerk nicht als reale Netzwerkteilnehmer existieren. Nachrichten an nicht existente Empfänger werden dann vom Gateway empfangen und nicht weitergeleitet. Ebenso können Netzwerkteilnehmer vorgesehene Nachrichten empfangen, auch wenn die im Soll-Netzwerk vorgesehenen Sender im ist-Netzwerk nicht als reale Netzwerkteilnehmer existieren. Das Gateway wird in diesem Fall so konfiguriert, dass es die Nachrichten der simulierten Sender erstellt und an die Empfänger versendet. Wenn im Soll-Netzwerk vorgesehene Sender und Empfänger im Ist-Netzwerk nicht als reale Netzwerkteilnehmer existieren, kann das Gateway dennoch den Netzwerkverkehr zwischen den Netzwerkteilnehmer simulieren und die Auslastung des Netzwerkes bei der Bestimmung der Verzögerungen der im Ist-Netzwerk real verschickten Nachrichten berücksichtigen.

Die abhängigen Ansprüche definieren entsprechende Ausführungsbeispiele. Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf.
Darin zeigt:
- Figur 1: eine schematische Ansicht eines Soll-Netzwerkes,
- Figur 2: eine schematische Ansicht eines Ist-Netzwerkes mit einem erfindungsgemäßen Gateway,
- Figur 3: eine schematische Ansicht eines weiteren Ist-Netzwerkes,
- Figur 4: eine schematische Ansicht eines weiteren Soll-Netzwerkes,
- Figur 5: eine schematische Ansicht eines weiteren Ist-Netzwerkes,
- Figur 6: eine schematische Ansicht eines weiteren Soll-Netzwerkes,
- Figur 7: eine schematische Ansicht eines Ist-Netzwerkes mit einem erfindungsgemäßen Gateway und einer Monitoringeinheit,
- Figur 8: eine Vergleich von Laufzeiten in unterschiedlichen Netzwerken.

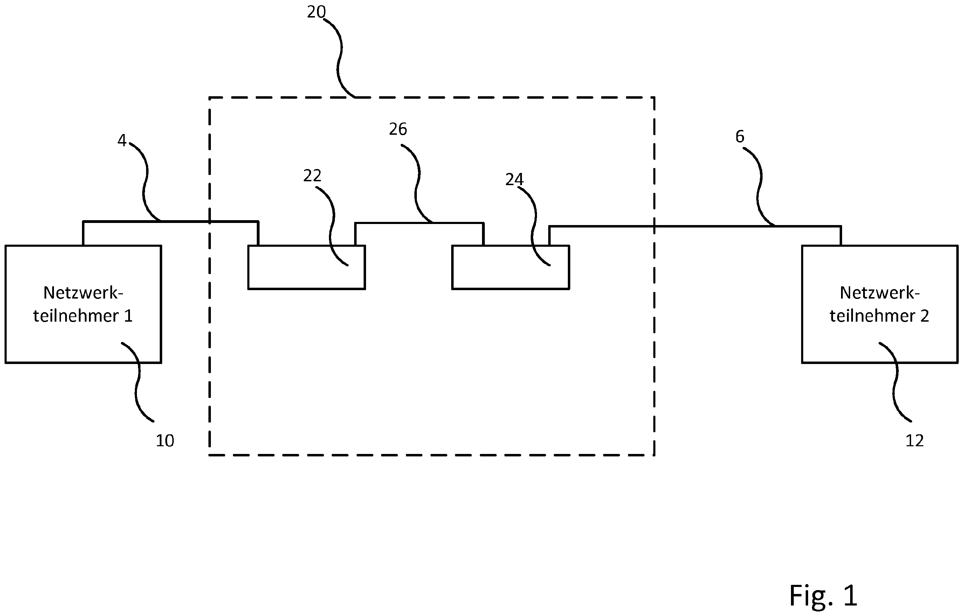

In Figur 1 ist eine schematische Ansicht eines Soll-Netzwerkes dargestellt. Im Soll-Netzwerk ist ein erster Netzwerkteilnehmer 10 über die erste Netzwerkleitung 4 mit einem ersten Netzwerkelement 22 verbunden und ein zweiter Netzwerkteilnehmer 12 ist über die zweite Netzwerkleitung 6 mit einem zweiten Netzwerkelement verbunden. Eine dritte Netzwerkleitung 26 verbindet das erste Netzwerkelement 22 und das zweite Netzwerkelement 24 miteinander. Eine erste Nachricht, die vom ersten Netzwerkteilnehmer 10 an den zweiten Netzwerkteilnehmer 12 gesendet wird, wird im Soll-Netzwerk vom ersten Netzwerkteilnehmer 10 über die erste Netzwerkleitung 4 zum ersten Netzwerkelement 22, von dort über die dritte Netzwerkleitung 26 zum zweiten Netzwerkelement 24 und weiter über die zweite Netzwerkleitung 6 zum zweiten Netzwerkteilnehmer 12 geleitet.

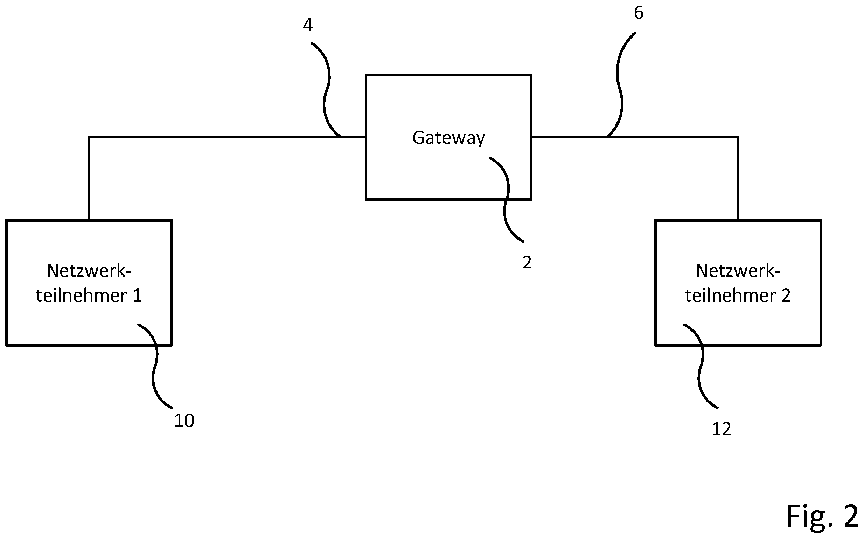

Die Abbildung der Figur 2 eine schematische Ansicht eines Ist-Netzwerkes mit einem erfindungsgemäßen Gateway. An das erfindungsgemäße Gateway 2 sind über die erste Netzwerkleitung 4 der erste Netzwerkteilnehmer 10 und über die zweite Netzwerkleitung 6 der zweite Netzwerkteilnehmer 12 verbunden. Das Gateway 2 stellt für jede Netzwerkleitung eine Netzwerkschnittstelle bereit an die die jeweilige Netzwerkleitung angeschlossen ist. Zur Nachbildung des Soll-Netzwerkes durch das Ist-Netzwerk, wird die Topologie des Soll-Netzwerkes in das Gateway 2 konfiguriert. Das Gateway 2 ersetzt im Ist-Netzwerk dann einen Netzwerkanteil 20 des Soll-Netzwerks. Im Beispiel des Soll-netzwerks aus Figur 1 besteht der durch das Gateway ersetzte Netzwerkanteil aus dem ersten Netzwerkelement 22, dem zweiten Netzwerkelement 24 und der dritten Netzwerkleitung 26. Dem Gateway 2 sind die Wege und Verzögerungen im Soll-Netzwerk bekannt und das Gateway 2 kann Nachrichten im Ist-Netzwerk so verzögern, dass die Laufzeiten der Nachrichten im Ist-Netzwerk im Wesentlichen gleich der Laufzeit der Nachrichten im Soll-Netzwerk sind. Der erste Netzwerkteilnehmer und der zweite Netzwerkteilnehmer sind im Ist-Netzwerk und im Soll-Netzwerk ähnlich, vorteilhafterweise baugleich oder identisch. Im Folgenden werden die Netzwerkteilnehmer im Soll-Netzwerk und im Ist-Netzwerk gleich gesetzt.

Eine erste Nachricht, die vom ersten Netzwerkteilnehmer 10 an den zweiten Netzwerkteilnehmer geschickt wird, wird im Ist-Netzwerk zunächst vom ersten Netzwerkteilnehmer 10 über die erste Netzwerkleitung 4 an das Gateway 2 übermittelt und dann vom Gateway 2 über die zweite Netzwerkleitung 6 an den zweiten Netzwerkteilnehmer 12 übermittelt. Das Gateway 2 speichert dabei die erste Nachricht zwischen und verzögert die Übermittlung zum zweiten Netzwerkteilnehmer 12 so, dass die Laufzeit der ersten Nachricht im Ist-Netzwerk im Wesentlichen gleich der Laufzeit der ersten Nachricht im Soll-Netzwerk ist. Die Dauer von der Aussendung der ersten Nachricht durch den ersten Netzwerkteilnehmer 10 bis zum Empfang der ersten Nachricht durch den zweiten Netzwerkteilnehmer 12 ist also unabhängig davon ob der erste Netzwerkteilnehmer 10 und der zweite Netzwerkteilnehmer 12 im Ist-Netzwerk oder im Soll-Netzwerk verbaut sind. Das Gateway 2 bildet also die Laufzeit durch ein Soll-Netzwerk nach. Ein Beispiel für ein Soll-Netzwerk, dessen Laufzeiten von einem erfindungsgemäßen Gateway 2 nachgebildet wird, ist in Figur 1 gezeigt. Das Soll-Netzwerk kann prinzipiell beliebig gestaltet sein und eine Vielzahl von Netzwerkelementen, Netzwerkleitungen und Netzwerkteilnehmern enthalten.

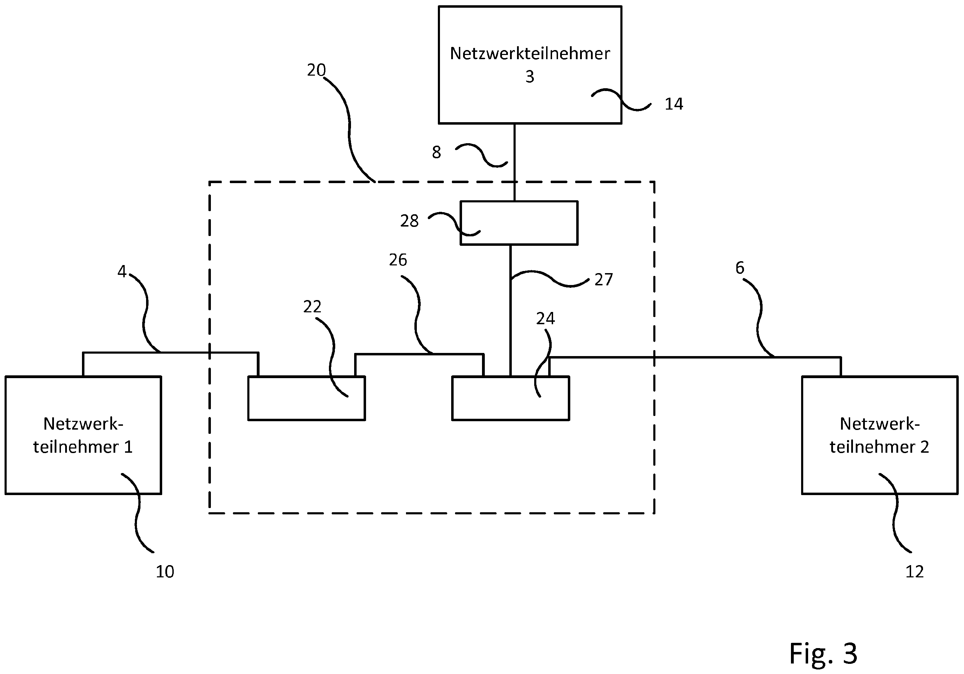

In Figur 3 ist eine schematische Ansicht eines weiteren Soll-Netzwerkes dargestellt. Im Folgenden werden nur die Unterschiede zu der Abbildung der Figur 1 erläutert. Ein drittes Netzwerkelement 28 ist über eine fünfte Netzwerkleitung 27 mit dem zweiten Netzwerkelement 24 verbunden. Der dritte Netzwerkteilnehmer 14 ist über die vierte Netzwerkleitung 8 mit dem dritten Netzwerkelement 28 verbunden. Eine zweite Nachricht, die vom ersten Netzwerkteilnehmer 10 zum dritten Netzwerkteilnehmer 14 versendet wird, müsste in der Topologie des Soll-Netzwerkes folglich den Weg über die erste Netzwerkleitung 4, die drei Netzwerkelement und die sie verbindenden Netzwerkleitungen, sowie die dritte Netzwerkleitung 8 zum dritten Netzwerkteilnehmer 14 nehmen. Der Weg und die Laufzeit der zweiten Nachricht vom ersten Netzwerkteilnehmer 10 zum dritten Netzwerkteilnehmer unterscheiden sich folglich vom Weg und der Laufzeit der ersten Nachricht vom ersten Netzwerkteilnehmer 10 zum zweiten Netzwerkteilnehmer 12.

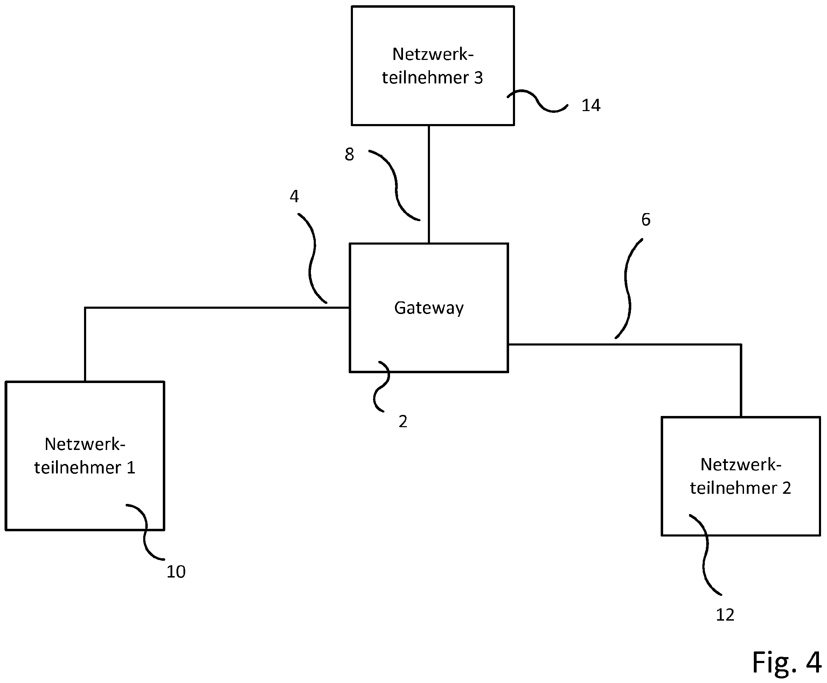

Figur 4 zeigt eine schematische Ansicht eines weiteren Ist-Netzwerkes. Im Folgenden werden nur die Unterschiede zu der Abbildung der Figur 2 erläutert. Der dritte Netzwerkteilnehmer 14 ist über die vierte Netzwerkleitung 8 mit dem Gateway 2 verbunden. Die zweite Nachricht, die vom ersten Netzwerkteilnehmer 10 an den dritten Netzwerkteilnehmer 14 im Ist-Netzwerk verschickt wird, wird vom Gateway 2 über die erste Netzwerkleitung 4 empfangen, ggf. verzögert und über die vierte Netzwerkleitung 8 an den dritten Netzwerkteilnehmer 14 versendet. Der vom Gateway im Ist-Netzwerk aus Figur 4 ersetzte Netzwerkanteil 20 des Soll-netzwerks aus Figur 3 erweitert sich im Vergleich zu dem Beispiel aus den Figuren 1 und 2 um das dritte Netzwerkelement 28 und die fünfte Netzwerkleitung zwischen dem zweiten Netzwerkelement und dem dritten Netzwerkelement. Aus der bekannten Topologie des Soll-Netzwerkes und ggf. weiteren Informationen wie den Verarbeitungszeiten der Netzwerkelemente oder den Laufzeiten zwischen den Netzwerkelementen kann das Gateway für eine im Ist-Netzwerk verschickte Nachricht eine passende Verzögerung bestimmen. Dabei wird von dem Gateway 2 der Weg der zweiten Nachricht, also über welche Netzwerkleitung die zweite Nachricht zu verschicken ist, nach Maßgabe der Topologie des Ist-Netzwerkes bestimmt wird und die Verzögerung der zweiten Nachricht nach Maßgabe der Topologie des Soll-Netzwerkes derart bestimmt wird, dass die Laufzeit der zweiten Nachricht im Ist-Netzwerk im Wesentlichen gleich der Laufzeit der zweiten Nachricht im Soll-Netzwerk ist. Ein beispielhaftes Soll-Netzwerk nach dessen Topologie die Verzögerung bestimmt werden könnte ist in Figur 3 gezeigt.

Eine dritte Nachricht, die vom zweiten Netzwerkteilnehmer 12 an den dritten Netzwerkteilnehmer 14 verschickt wird, müsste in der Topologie des Soll-Netzwerkes aus Figur 3 folglich den Weg vom zweiten Netzwerkteilnehmer 12 über die zweite Netzwerkleitung 6, das zweite Netzwerkelement 24, die fünfte Netzwerkleitung 27, das dritte Netzwerkelement 28 und die vierte Netzwerkleitung 8 zum dritten Netzwerkteilnehmer 14 nehmen. Dies führt zu einer zusätzlichen Auslastung dieser Elemente und kann damit zu einer zusätzlichen Verzögerung der ersten Nachricht führen. Beispielsweise kann das zweite Netzwerkelement 24 mit der Verarbeitung der dritten Nachricht beschäftigt sein, während es die erste Nachricht empfängt und kann folglich die erste Nachricht erst verarbeiten, wenn es die Verarbeitung der dritten Nachricht abgeschlossen hat. Das Gateway im Ist-Netzwerk, wie es in Figur 4 dargestellt ist, das den oben beschriebenen Netzwerkanteil 20 des Soll-Netzwerkes aus Figur 3 ersetzt, wird eine solche Auslastung des zweiten Netzwerkelementes 24 erkennen, wenn es die dritte Nachricht empfängt bevor es die erste Nachricht an den zweiten Netzwerkteilnehmer verschickt hat und die erste Nachricht so verzögern, dass die Laufzeit im Ist-Netzwerk im Wesentlichen gleich der vergrößerten Laufzeit im Soll-Netzwerk ist.

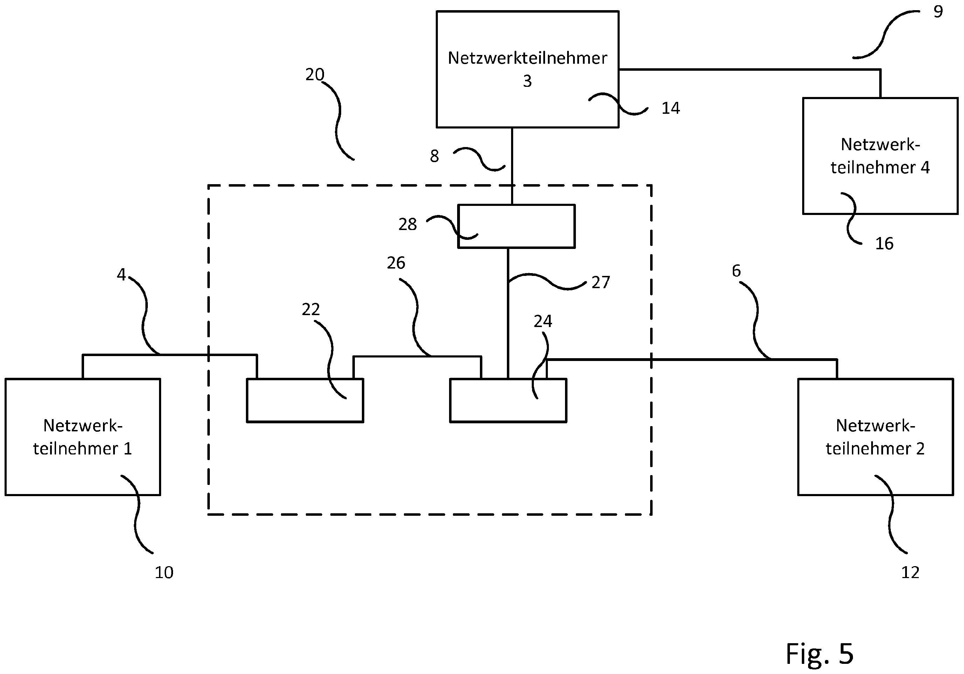

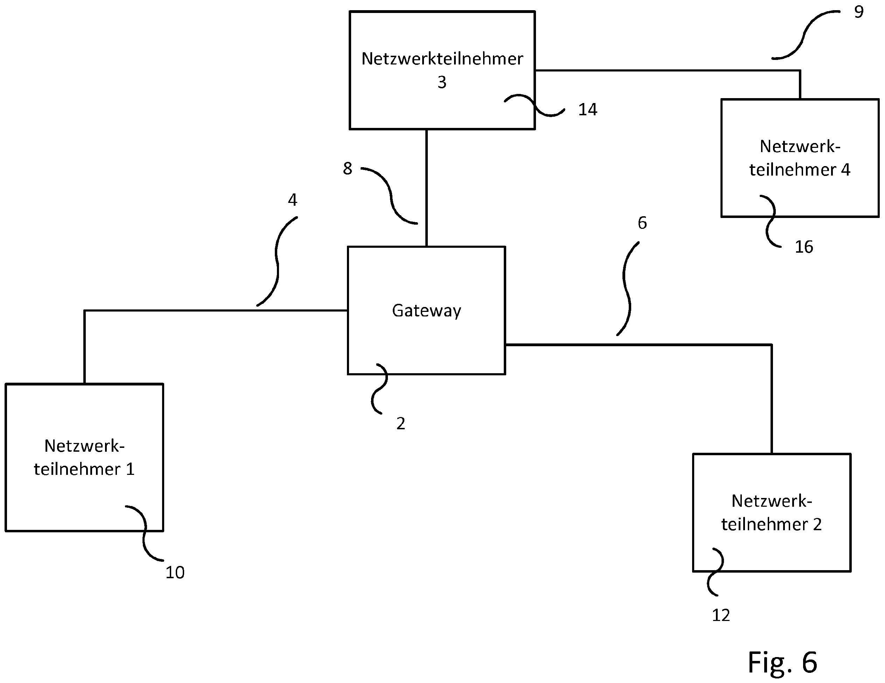

Figur 5 zeigt eine schematische Ansicht eines weiteren Soll-Netzwerkes. Im Folgenden werden nur die Unterschiede zu der Abbildung der Figur 3 erläutert. Ein vierter Netzwerkteilnehmer 16 ist über eine sechste Netzwerkleitung 9 mit dem dritten Netzwerkteilnehmer 14 verbunden. Eine vierte Nachricht, die vom ersten Netzwerkteilnehmer 10 an den vierten Netzwerkteilnehmer 16 verschickt wird, müsste in der Topologie des Soll-Netzwerkes folglich den Weg über die erste Netzwerkleitung 4, die drei Netzwerkelemente und die sie verbindenden Netzwerkleitungen, sowie die vierte Netzwerkleitung 8 zum dritten Netzwerkteilnehmer 14 und von dort über die sechste Netzwerkleitung 9 zum vierten Netzwerkteilnehmer 16 nehmen. Der vom Gateway 2 im Ist-Netzwerk aus Figur 6 ersetzte Netzwerkanteil 20 des Soll-Netzwerks aus Figur 5 ist in diesem Fall identisch mit dem ersetzen Netzwerkanteil 20 aus dem Beispiel der Figuren 3 und 4.

In Figur 6 ist eine schematische Ansicht eines weiteren Ist-Netzwerkes dargestellt. Im Folgenden werden nur die Unterschiede zu der Abbildung der Figur 4 erläutert. Der vierte Netzwerkteilnehmer 16 ist über die sechste Netzwerkleitung 9 mit dem dritten Netzwerkteilnehmer 14 verbunden. Die vierte Nachricht, die vom ersten Netzwerkteilnehmer 10 an den vierten Netzwerkteilnehmer 16 verschickt wird, wird vom Gateway 2 über die erste Netzwerkleitung 4 empfangen, ggf. verzögert und über die vierte Netzwerkleitung 8 auf einen Weg zu dem vierten Netzwerkteilnehmer gesendet. Das Gateway 2 wird für die vierte Nachricht den Weg nach Maßgabe der Topologie des Ist-Netzwerkes und die Verzögerung nach Maßgabe des Soll-Netzwerkes bestimmen, sodass die Laufzeit der zweiten Nachricht im Ist-Netzwerk im Wesentlichen gleich der Laufzeit der zweiten Nachricht im Soll-Netzwerk ist.

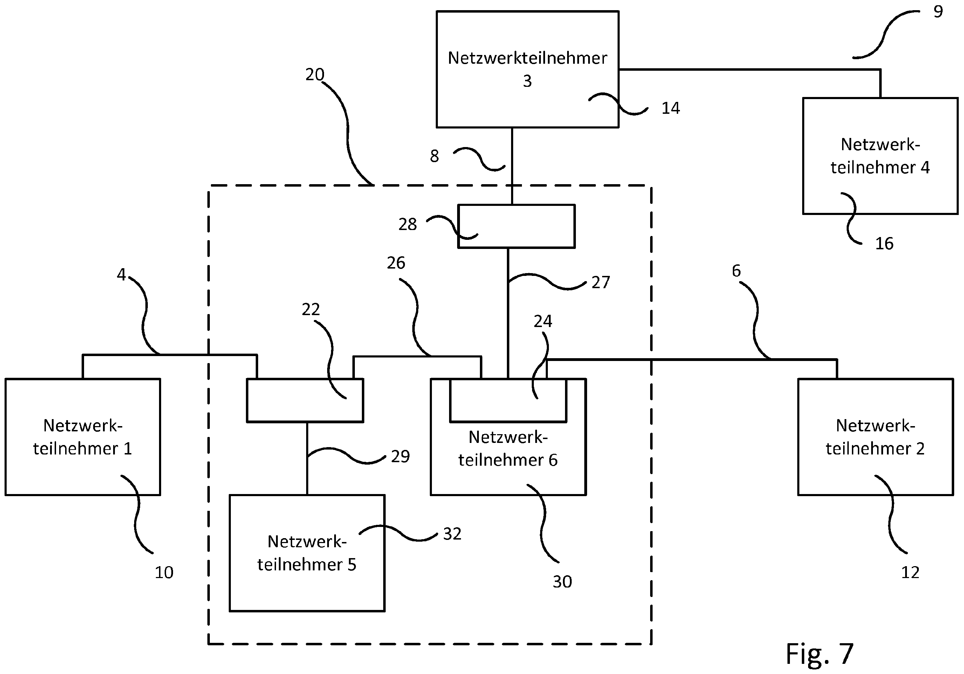

Figur 7 zeigt eine schematische Ansicht eines weiteren Soll-Netzwerkes bei dem sich der Netzwerkanteil 20, der vom Gateway 2 aus Figur 6 ersetzt wird von dem Netzwerkanteil aus Figur 5 unterscheidet. Im Folgenden werden nur die Unterschiede zu der Abbildung der Figur 5 erläutert. Ein fünfter Netzwerkteilnehmer 32 ist über eine siebte Netzwerkleitung 29 mit dem ersten Netzwerkelement 22 verbunden. Das zweite Netzwerkelement 24 ist als Teil eines sechsten Netzwerkteilnehmers 30 ausgebildet. Der vom Gateway im Ist-Netzwerk aus Figur 6 ersetzte Netzwerkanteil 20 des Soll-Netzwerks aus Figur 7 erweitert sich um den fünften Netzwerkteilnehmer 32, den sechsten Netzwerkteilnehmer 30 und die siebte Netzwerkleitung 29. Eine fünfte Nachricht, die vom fünften Netzwerkteilnehmer 32 an den dritten Netzwerkteilnehmer 14 geschickt wird, müsste in der Topologie des Soll-Netzwerkes folglich den Weg über die siebte Netzwerkleitung 29, das erste Netzwerkelement 22, die dritte Netzwerkleitung 26, das zweite Netzwerkelement 24, die fünfte Netzwerkleitung 27, das dritte Netzwerkelement 28 und die vierte Netzwerkleitung 8 zum dritten Netzwerkteilnehmer 14 nehmen. Falls gleichzeitig die erste Nachricht vom ersten Netzwerkteilnehmer 10 zum zweiten Netzwerkteilnehmer übertragen werden soll, kann es zu zusätzlichen Verzögerungen kommen, da beide Nachrichten über das erste Netzwerkelement 22, die dritte Netzwerkleitung 26 und das zweite Netzwerkelement 24 übertragen werden müssen. Im Ist-Netzwerk von Figur 6 simuliert das Gateway 2 den ersetzten Netzwerkanteil 20 des Soll-Netzwerkes und damit auch den fünften Netzwerkteilnehmer 32. Das Gateway wird entsprechend die Auslastung der Netzwerkelemente und der Netzwerkleitungen durch die fünfte Nachricht und die dadurch hervorgerufene Verzögerung der ersten Nachricht und der fünften Nachricht bestimmen und die Verzögerung der ersten und der fünften Nachricht so wählen, dass die Laufzeiten der Nachrichten im Ist-Netzwerk im Wesentlichen gleich der Laufzeiten der Nachrichten im Soll-Netzwerk sind.

Eine sechste Nachricht, die vom sechsten Netzwerkteilnehmer 30 an den fünften Netzwerkteilnehmer 32 versendet wird, wird im Ist-Netzwerk lediglich simuliert und weder vom Gateway 2 empfangen noch vom Gateway 2 versendet. Dennoch wird vom Gateway 2 die Auslastung der Netzwerkelemente und Netzwerkleitungen im ersetzten Netzwerkanteil 20 durch die sechste Nachricht bestimmt und die dadurch verursachten zusätzlichen Verzögerungen auf andere Nachrichten berücksichtigt.

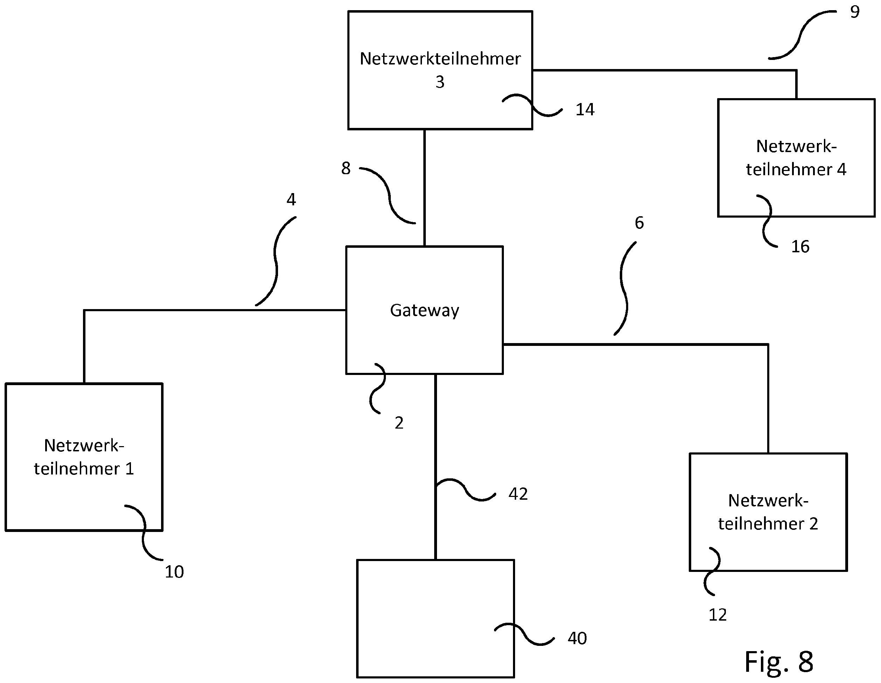

In Figur 8 ist eine schematische Ansicht eines weiteren Ist-Netzwerkes dargestellt. Im Folgenden werden nur die Unterschiede zu der Abbildung der Figur 6 erläutert. Eine Monitoringeinheit 40 ist über eine siebte Netzwerkleitung 42 an das Gateway 2 angeschlossen. Das Gateway 2 kann Kopien von Nachrichten, die vom Gateway empfangen und/oder versendet werden an die Monitoringeinheit 40 senden. Dies kann für alle Nachrichten oder nach einer Filterung für ausgewählte Nachrichten geschehen. Eine solche Filterung kann beispielsweise auf Eigenschaften der Nachrichten, wie Sender, Empfänger, Größe, Identifikationsnummer oder ähnliches, aufsetzen. Durch die Speicherung der Kopien der Nachrichten, ist es möglich den Netzwerkverkehr nachzuvollziehen und Probleme in der Kommunikation aufzuspüren. In einer Variante der Erfindung kann die Monitoringeinheit 40 mit dem Gateway 2 auch eine Einheit bilden.

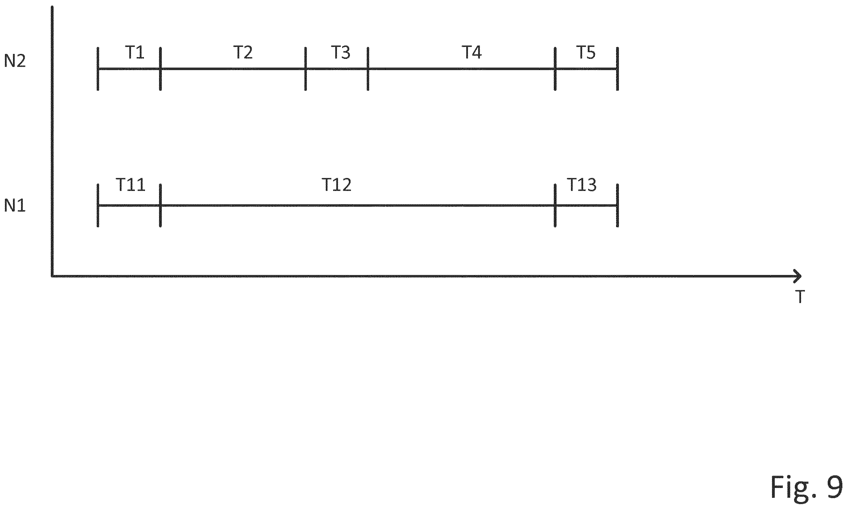

Figur 9 zeigt einen Vergleich unterschiedlicher Laufzeiten von Nachrichten. Entlang der Waagerechten ist die Zeit T aufgetragen. Eine erste Laufzeit N1 zeigt die Laufzeit der ersten Nachricht beispielhaft für die Ausgestaltung des Ist-Netzwerkes der Figur 1. Dabei wird die erste Nachricht von dem ersten Netzwerkteilnehmer 10 zu dem zweiten Netzwerkteilnehmer 12 durch das Gateway 2 versendet, wobei das Gateway 2 die erste Nachricht erfindungsgemäß verzögert. Die erste Nachricht wird in einem ersten Zeitraum T11 von dem ersten Netzwerkteilnehmer 10 an das Gateway 2 übermittelt, von dem Gateway 2 in einem zweiten Zeitraum T12 verarbeitet und verzögert und in einem dritten Zeitraum T13 an den zweiten Netzwerkteilnehmer 12 übermittelt. Die Laufzeit der ersten Nachricht von dem ersten Netzwerkteilnehmer 10 zu dem zweiten Netzwerkteilnehmer 12 im Ist-Netzwerk der Figur 1 ist also die Summer der drei Zeiträume T11, T12, T13.

Die zweite Laufzeit N2 zeigt die Laufzeit für die erste Nachricht von dem ersten Netzwerkteilnehmer 10 zu dem zweiten Netzwerkteilnehmer 12 beispielhaft für das in Figur 2 gezeigte Soll-Netzwerk. Die erste Nachricht wird zunächst von dem ersten Netzwerkteilnehmer 10 in einem vierten Zeitraum T1 an das erste Netzwerkelement 22 übermittelt. Das erste Netzwerkelement 22 verarbeitet die erste Nachricht in einem fünften Zeitraum T2 und übermittelt die erste Nachricht in einem sechsten Zeitraum T3 an das zweite Netzwerkelement 24. Das zweite Netzwerkelement 24 verarbeitet die erste Nachricht in einem siebten Zeitraum T4 und übermittelt die erste Nachricht in einem achten Zeitraum T5 an den zweiten Netzwerkteilnehmer 12. Die Laufzeit der ersten Nachricht von dem ersten Netzwerkteilnehmer 10 zu dem zweiten Netzwerkteilnehmer 12 im Soll-Netzwerk der Figur 2 ist also die Summer der fünf Zeiträume T1, T2, T3, T4, T5. Die Verzögerung der ersten Nachricht durch das Gateway 2 und damit die Länge der zweiten Zeitspanne wird dann so gewählt, dass die Summe der Zeiträume der ersten Laufzeit N1 im Wesentlichen gleich ist zu der Summe der Zeiträume der zweiten Laufzeit N2.

## Patentansprüche

1. Verfahren , bei dem Laufzeiten eines Soll-Netzwerkes in einem Ist-Netzwerk nachgebildet werden,
wobei die Topologie des Sollnetzwerkes eine Anzahl von Sendern und eine Anzahl von Empfängern umfasst,
und wobei die Topologie des Ist-Netzwerkes einen oder mehrere der Sender und Empfänger umfasst,
wobei sich der Weg zwischen einem ersten Sender (10) und einem ersten Empfänger (12) in der Topologie des Ist-Netzwerks vom Weg zwischen dem ersten Sender und dem ersten Empfänger in der Topologie des Soll-Netzwerks unterscheidet,
wobei in dem Ist-Netzwerk mindestens eine erste Nachricht des ersten Senders (10) von einem Gateway (2) mit mindestens zwei Netzwerkschnittstellen über eine erste Netzwerkschnittstelle empfangen wird, um eine Verzögerung verzögert wird und über eine zweite Netzwerkschnittstelle auf einen Weg zu dem ersten Empfänger gesendet wird,
wobei der Weg der ersten Nachricht nach Maßgabe der Topologie des Ist-Netzwerkes bestimmt wird und die Verzögerung der Nachricht nach Maßgabe der Topologie des Soll-Netzwerkes derart bestimmt wird, dass die Laufzeit der ersten Nachricht im Ist-Netzwerk im Wesentlichen gleich der Laufzeit der ersten Nachricht im Soll-Netzwerk ist,
**dadurch gekennzeichnet, dass** die Verarbeitungszeiten der Netzwerkelemente (22, 24, 28) im Soll-Netzwerk dem Gateway (2) bekannt sind.

2. Verfahren nach Anspruch 1, **dadurch gekennzeichnet, dass** sich der Weg zwischen dem ersten Sender (10) und einem zweiten Empfänger (14) in der Topologie des Soll-Netzwerks von dem Weg zwischen dem ersten Sender (10) und dem ersten Empfänger (12) in der Topologie des Soll-Netzwerks unterscheidet,
wobei in dem Ist-Netzwerk mindestens eine zweite Nachricht des ersten Senders (10) von dem Gateway (2) empfangen wird, um eine zweite Verzögerung verzögert wird und auf einen Weg zu dem zweiten Empfänger (14) gesendet wird,
wobei der Weg der zweiten Nachricht nach Maßgabe der Topologie des Ist-Netzwerkes bestimmt wird
und die Verzögerung der zweiten Nachricht nach Maßgabe der Topologie des Soll-Netzwerkes derart bestimmt wird, dass die Laufzeit der zweiten Nachricht im Ist-Netzwerk im Wesentlichen gleich der Laufzeit der zweiten Nachricht im Soll-Netzwerk ist.

3. Verfahren nach einem der vorhergehenden Ansprüche, **dadurch gekennzeichnet, dass** die Laufzeiten zwischen den Netzwerkelementen (22, 24, 28) im Soll-Netzwerk dem Gateway (2) bekannt sind.

4. Verfahren nach einem der vorhergehenden Ansprüche, **dadurch gekennzeichnet, dass** das Soll-Netzwerk zumindest teilweise ein Ethernet-, CAN- und/oder FlexRay-Netzwerk ist.

5. Verfahren nach einem der vorhergehenden Ansprüche, **dadurch gekennzeichnet, dass** von dem Gateway eine Kopie der ersten Nachricht an einen dritten Empfänger (40) versendet wird.

6. Verfahren Anspruch 5, **dadurch gekennzeichnet, dass** die erste Nachricht von dem Gateway (2) auf zumindest ein Merkmal geprüft und in Abhängigkeit von der Prüfung eine Kopie der ersten Nachricht an den dritten Empfänger (40) versendet wird.

7. Verfahren nach einem der vorhergehenden Ansprüche, **dadurch gekennzeichnet, dass** die erste Nachricht von dem Gateway (2) nach dem Empfang und vor der Versendung an den zweiten Empfänger vom Gateway (2) verändert wird.

8. Verfahren Anspruch 7, **dadurch gekennzeichnet, dass** die Veränderung der ersten Nachricht eine Umwandlung der ersten Nachricht von einem ersten Protokoll in zweites Protokoll betrifft.

9. Verfahren nach Anspruch 7, **dadurch gekennzeichnet, dass** die Veränderung der ersten Nachricht eine Veränderung des Inhalts der Nachricht betrifft.

10. Verfahren nach einem der vorhergehenden Ansprüche, **dadurch gekennzeichnet, dass** das Gateway die Auslastung von Netzwerkelemente und/oder Netzwerkleitungen im Soll-Netzwerk bestimmt und die Verzögerung der ersten Nachricht bei hoher Auslastung von Netzwerkelementen und/oder Netzwerkleitungen zusätzlich erhöht.

11. Verfahren Anspruch 10, **dadurch gekennzeichnet, dass** eine dritte Nachricht über eine dritte Netzwerkschnittstelle vom Gateway (2) empfangen wird, der Weg der dritten Nachricht im Soll-Netzwerk vom Gateway (2) bestimmt wird und die Verzögerung der ersten Nachricht vergrößert wird, wenn die dritte Nachricht im Soll-Netzwerk zu einer zusätzlichen Verzögerung der ersten Nachricht führt.

12. Verfahren nach einem der vorhergehenden Ansprüche, **dadurch gekennzeichnet, dass** vom Gateway (2) eine vierte Nachricht innerhalb des Soll-Netzwerks simuliert wird und die Verzögerung der ersten Nachricht vergrößert wird, wenn die vierte Nachricht im Soll-Netzwerk zu einer zusätzlichen Verzögerung der ersten Nachricht führt.

13. Gateway (2) zur Nachbildung von Laufzeiten eines Soll-Netzwerkes in einem Ist-Netzwerk,
wobei die Topologie des Sollnetzwerkes eine Anzahl von Sendern und eine Anzahl von Empfängern umfasst,
und wobei die Topologie des Ist-Netzwerkes einen oder mehrere der Sender und Empfänger umfasst,
wobei sich der Weg zwischen einem ersten Sender (10) und einem ersten Empfänger (12) in der Topologie des Ist-Netzwerks vom Weg zwischen dem ersten Sender (10) und dem ersten Empfänger (12) in der Topologie des Soll-Netzwerks unterscheidet,
wobei in dem Ist-Netzwerk mindestens eine erste Nachricht des ersten Senders (10) von dem Gateway (2) mit mindestens zwei Netzwerkschnittstellen über eine erste Netzwerkschnittstelle empfangen wird, um eine Verzögerung verzögert wird und über eine zweite Netzwerkschnittstelle auf einen Weg zu dem ersten Empfänger gesendet wird,
wobei der Weg der ersten Nachricht von dem Gateway (2) nach Maßgabe der Topologie des Ist-Netzwerkes bestimmt wird und die Verzögerung der Nachricht von dem Gateway (2) nach Maßgabe der Topologie des Soll-Netzwerkes derart bestimmt wird, dass die Laufzeit der ersten Nachricht im Ist-Netzwerk im Wesentlichen gleich der Laufzeit der ersten Nachricht im Soll-Netzwerk ist,
**dadurch gekennzeichnet, dass** die Verarbeitungszeiten der Netzwerkelemente (22, 24, 28) im Soll-Netzwerk dem Gateway (2) bekannt sind.

## Claims

1. A method for reproducing transit times of an ideal network in a real network,
the topology of the ideal network comprising a plurality of transmitters and a plurality of receivers,
and the topology of the real network comprising one or more of the transmitters and receivers,
the path between a first transmitter (10) and a first receiver (12) in the topology of the real network differing from the path between the first transmitter and the first receiver in the topology of the ideal network,
at least one first message of the first transmitter (10) being received by a gateway (2) having at least two network interfaces via a first network interface in the real network, being delayed by a first delay time, and being transmitted via a second network interface on a path to the first receiver,
the path of the first message being determined according to requirements of the topology of the real network and the delay of the message being determined according to requirements of the topology of the ideal network, such that the transit time of the first message in the real network is substantially equal to the transit time of the first message in the ideal network, **characterized in that** the processing times of the network elements (22, 24, 28) in the ideal network are known to the gateway (2).

2. The method according to claim 1, **characterized in that** the path between the first transmitter (10) and a second receiver (14) in the topology of the ideal network differs from the path between the first transmitter (10) and the first receiver (12) in the topology of the ideal network,
wherein at least one second message of the first transmitter (10) is received by the gateway (2) in the real network, is delayed by a second delay time, and is transmitted to the second receiver (14) on a path,
wherein the path of the second message is determined according to requirements of the topology of the real network,
and the delay time of the second message is determined according to requirements of the topology of the ideal network, such that the transit time of the second message in the real network is substantially equal to the transit time of the second message in the ideal network.

3. The method according to any one of the preceding claims, **characterized in that** the transit times between the network elements (22, 24, 28) in the ideal network are known to the gateway (2).

4. The method according to any one of the preceding claims, **characterized in that** the ideal network is at least partially an Ethernet, CAN, and/or FlexRay network.

5. The method according to any one of the preceding claims, **characterized in that** a copy of the first message is transmitted to a third receiver (40) by the gateway.

6. The method according to claim 5, **characterized in that** the first message is checked for at least one feature by the gateway (2) and a copy of the first message is sent to the third receiver (40) as a function of the check.

7. The method according to any one of the preceding claims, **characterized in that** the first message is modified by the gateway (2) after being received and before being transmitted to the second receiver by the gateway (2).

8. The method according to claim 7, **characterized in that** the modifying of the first message relates to converting the first message from a first protocol into a second protocol.

9. The method according to claim 7, **characterized in that** the modifying of the first message relates to modifying the content of the message.

10. The method according to any one of the preceding claims, **characterized in that** the gateway determines the capacity utilization of the network elements and/or network lines in the ideal network and additionally increases the delay time of the first message if the capacity utilization of the network elements and/or the network lines is high.

11. The method according to claim 10, **characterized in that** a third message is received by the gateway (2) via a third network interface, the path of the third message in the ideal network is determined by the gateway (2), and the delay time of the first message is increased if the third message leads to an additional delay of the first message in the ideal network.

12. The method according to any one of the preceding claims, **characterized in that** a fourth network is simulated by the gateway (2) within the ideal network and the delay time of the first message is increased if the fourth message leads to an additional delay of the first message in the ideal network.

13. A gateway (2) for reproducing transit times of an ideal network in a real network,
the topology of the ideal network comprising a plurality of transmitters and a plurality of receivers,
and the topology of the real network comprising one or more of the transmitters and receivers,
the path between a first transmitter (10) and a first receiver (12) in the topology of the real network differing from the path between the first transmitter (10) and the first receiver (12) in the topology of the ideal network,
at least one first message of the first transmitter (10) being received by a gateway (2) having at least two network interfaces via a first network interface in the real network, being delayed by a first delay, and being transmitted via a second network interface on a path to the first receiver,
the path of the first message being determined by the gateway (2) according to requirements of the topology of the real network and the delay of the message being determined by the gateway (2) according to the requirements of the topology of the ideal network, such that the transit time of the first message in the real network is substantially equal to the transit time of the first message in the ideal network, **characterized in that** the processing times of the network elements (22, 24, 28) in the ideal network are known to the gateway (2).

## Revendications

1. Procédé dans lequel des durées d'exécution d'un réseau théorique sont émulées dans un réseau réel,
dans lequel la topologie du réseau théorique comprend une multitude d'émetteurs et une multitude de destinataires,
et dans lequel la topologie du réseau réel comprend un ou plusieurs des émetteurs et destinataires,
dans lequel le trajet entre un premier émetteur (10) et un premier destinataire (12) dans la topologie du réseau réel est différent du trajet entre le premier émetteur et le premier destinataire dans la topologie du réseau théorique,
dans lequel, dans le réseau réel, au moins un premier message du premier émetteur (10) est reçu depuis une passerelle (2) possédant au moins deux interfaces réseau via une première interface réseau, retardé d'un retard et envoyé via une seconde interface réseau sur un trajet au premier destinataire,
dans lequel le trajet du premier message est déterminé conformément à la topologie du réseau réel et le retard du message est déterminé conformément à la topologie du réseau théorique de sorte que la durée d'exécution du premier message dans le réseau réel soit essentiellement égale à la durée d'exécution du premier message dans le réseau théorique,
**caractérisé en ce que** les temps de traitement des éléments de réseau (22, 24, 28) dans le réseau théorique sont connus de la passerelle (2) .

2. Procédé selon la revendication 1, **caractérisé en ce que** le trajet entre le premier émetteur (10) et un second destinataire (14) dans la topologie du réseau théorique est différent du trajet entre le premier émetteur (10) et le premier destinataire (12) dans la topologie du réseau théorique,
dans lequel, dans le réseau réel, au moins un second message du premier émetteur (10) est reçu depuis la passerelle (2), retardé d'un second retard et envoyé sur un trajet au second destinataire (14),
dans lequel le trajet du second message est déterminé conformément à la topologie du réseau réel
et le retard du second message est déterminé conformément à la topologie du réseau théorique de sorte que la durée d'exécution du second message dans le réseau réel soit essentiellement égale à la durée d'exécution du second message dans le réseau théorique.

3. Procédé selon l'une des revendications précédentes, **caractérisé en ce que** les durées d'exécution entre les éléments de réseau (22, 24, 28) dans le réseau théorique sont connues de la passerelle (2).

4. Procédé selon l'une des revendications précédentes, **caractérisé en ce que** le réseau théorique est au moins partiellement un réseau Ethernet, CAN et/ou FlexRay.

5. Procédé selon l'une des revendications précédentes, **caractérisé en ce qu'**une copie du premier message est envoyée par la passerelle à un troisième destinataire (40).

6. Procédé selon la revendication 5, **caractérisé en ce que** le premier message est vérifié par la passerelle (2) par rapport à au moins une caractéristique et une copie du premier message est envoyée au troisième destinataire (40) en fonction du contrôle.

7. Procédé selon l'une des revendications précédentes, **caractérisé en ce que** le premier message est modifié par la passerelle (2) après la réception et avant l'envoi au second destinataire par la passerelle (2).

8. Procédé selon la revendication 7, **caractérisé en ce que** la modification du premier message concerne une conversion du premier message d'un premier protocole en un second protocole.

9. Procédé selon la revendication 7, **caractérisé en ce que** la modification du premier message concerne une modification du contenu du message.

10. Procédé selon l'une des revendications précédentes, **caractérisé en ce que** la passerelle détermine le taux d'utilisation des éléments de réseau et/ou des lignes de réseau dans le réseau théorique et augmente davantage le retard du premier message en cas de taux d'utilisation élevé des éléments de réseau et/ou des lignes de réseau.

11. Procédé selon la revendication 10, **caractérisé en ce qu'**un troisième message est reçu par la passerelle (2) via une troisième interface réseau, le trajet du troisième message dans le réseau théorique est déterminé par la passerelle (2) et le retard du premier message est augmenté si le troisième message entraîne dans le réseau théorique un retard supplémentaire du premier message.

12. Procédé selon l'une des revendications précédentes, **caractérisé en ce qu'**un quatrième message est simulé par la passerelle (2) au sein du réseau théorique et le retard du premier message est augmenté si le quatrième message entraîne dans le réseau théorique un retard supplémentaire du premier message.

13. Passerelle (2) pour émuler des durées d'exécution d'un réseau théorique dans un réseau réel,
dans laquelle la topologie du réseau théorique comprend une multitude d'émetteurs et une multitude de destinataires,
et dans laquelle la topologie du réseau réel comprend un ou plusieurs des émetteurs et destinataires,
dans laquelle le trajet entre un premier émetteur (10) et un premier destinataire (12) dans la topologie du réseau réel est différent du trajet entre le premier émetteur (10) et le premier destinataire (12) dans la topologie du réseau théorique, dans laquelle, dans le réseau réel, au moins un premier message du premier émetteur (10) est reçu depuis la passerelle (2) possédant au moins deux interfaces réseau via une première interface réseau, retardé d'un retard et envoyé via une seconde interface réseau sur un trajet au premier destinataire,
dans laquelle le trajet du premier message est déterminé par la passerelle (2) conformément à la topologie du réseau réel et le retard du message est déterminé par la passerelle (2) conformément à la topologie du réseau théorique de sorte que la durée d'exécution du premier message dans le réseau réel soit essentiellement égale à la durée d'exécution du premier message dans le réseau théorique,
**caractérisée en ce que** les temps de traitement des éléments de réseau (22, 24, 28) dans le réseau théorique sont connus de la passerelle (2) .
